# EUROPEAN PATENT APPLICATION

(11) **EP 4 768 519 A1**
(43) Date of publication of application: **01.07.2026**
(21) Application number: 23953924.0
(22) Date of filing: 31.10.2023
(51) Int. Cl.: C08G 69/14, C08G 69/20, C08L 77/02, C08J 5/04

(54) **REACTIVELY-EXTRUDED GLASS FIBER REINFORCED PA6 MATERIAL AND PREPARATION METHOD THEREFOR**

(30) Priority: 28.09.2023 CN 202311269962
(71) Applicant: Hefei Genius Advanced Material Co., Ltd., Hefei Anhui 230601 (CN)
(72) Inventor: JI, Pingting, Hefei, Anhui 230601 (CN); YANG, Guisheng, Hefei, Anhui 230601 (CN); ZHU, Min, Hefei, Anhui 230601 (CN); ZHAO, Xin, Hefei, Anhui 230601 (CN); LIAO, Xiongbing, Hefei, Anhui 230601 (CN)
(74) Representative: VKK Patentanwälte PartG mbB
(86) International application number: PCT/CN2023/128661
(87) International publication number: WO 2025/065789

(57) **Abstract**

The present invention discloses a reactive extrusion glass fiber-reinforced PA6 material, which is prepared from the following components in parts by weight: 14.8-79.1 parts of caprolactam, 0.2-2 parts of an additive TMI-g, 20-80 parts of glass fiber, 0.3-2 parts of an initiator, 0.2-0.6 parts of an antioxidant, and 0.2-0.6 parts of a light stabilizer. A glass fiber-reinforced PA6 material is prepared by reactive extrusion of anionic ring-opening polymerization of caprolactam. In the present invention, a specially prepared TMI-g material is used as a catalyst and a compatibilizer, wherein TMI, as a catalyst for an anionic polymerization reaction of caprolactam, can initiate ring-opening polymerization of caprolactam in the presence of a basic anionic initiator; and maleic anhydride itself has good compatibility with glass fibers. Therefore, the TMI-g enables the caprolactam to densely polymerize and crystallize around the glass fibers, thereby obtaining a modified PA6 material with excellent performance.

## Description

### TECHNICAL FIELD

The present invention relates to the field of polymer materials, and in particular to a reactive extrusion glass fiber-reinforced PA6 material and a method for preparing the same.

### BACKGROUND

Nylon 6 is one of the most widely used engineering plastics. PA6 has high crystallinity, a high melting point, excellent mechanical properties, and good impact resistance, and possesses wear resistance and self-lubrication properties, which can be applied in various engineering plastic parts. For common glass fiber-reinforced modified PA6, a product is obtained by melt-blending PA6 and glass fibers using a twin-screw extruder. However, the viscosity of molten PA6 is relatively high, the addition ratio of glass fiber is at most about 50%, and the process is a simple physical blending; thus, the bonding strength between the glass fibers and the PA6 matrix is not high, and phase separation easily occurs.

### SUMMARY

In view of this, the present invention provides a reactive extrusion glass fiber-reinforced PA6 material and a method for preparing the same to solve the problems raised in the above background. A glass fiber-reinforced PA6 material is prepared by reactive extrusion of anionic ring-opening polymerization of caprolactam. By using a specially prepared TMI-g material as a catalyst and a compatibilizer, the caprolactam densely polymerizes and crystallizes around the glass fibers, thereby obtaining a modified material with excellent performance.

In order to achieve the above object, the present invention provides the following technical solution:
In an aspect, the present invention discloses a reactive extrusion glass fiber-reinforced PA6 material, which is prepared from the following components in parts by weight:
- Caprolactam: 14.8-79.1 parts
- Additive TMI-g: 0.2-2 parts
- Glass fiber: 20-80 parts
- Initiator: 0.3-2 parts
- Antioxidant: 0.2-0.6 parts
- Light stabilizer: 0.2-0.6 parts.

In a further solution, the caprolactam is a crystalline raw material with a purity of 99.0% or higher.

In a further solution, the method for preparing the additive TMI-g is as follows:
Under a nitrogen atmosphere and at 78°C-83°C, 3-Isopropenyl-α,α-dimethylbenzyl isocyanate and maleic anhydride are mixed at a mass ratio of 1:(1-3), heated, melted, and stirred for 20-30 hours, and then cooled for crystallization to obtain the additive TMI-g.

In a further solution, the glass fiber is at least one selected from the group consisting of continuous glass fibers and chopped glass fibers.

In a further solution, the initiator is at least one selected from the group consisting of sodium hydroxide, C10 initiator, and C1 initiator.

In a further solution, the antioxidant is at least one selected from the group consisting of hindered amine antioxidants and phosphite antioxidants.

In a further solution, the light stabilizer is at least one selected from the group consisting of hindered amine light stabilizers and hindered phenol light stabilizers.

In another aspect, the present invention discloses a method for preparing the reactive extrusion glass fiber-reinforced PA6 material as described above, comprising the following steps:
Weighing the components in parts by weight, feeding the caprolactam, the initiator, the antioxidant, and the light stabilizer into the main feeding port of a twin-screw extruder, feeding the additive TMI-g into the side feeding port of the twin-screw extruder, and feeding the glass fibers into the side feeding port for glass fibers, to obtain the glass fiber-reinforced PA6 material through reactive extrusion; wherein the temperature of the first zone of the twin-screw extruder is 160°C-200°C, the temperature of the second zone is 210°C-230°C, the temperature of the third zone is 220°C-240°C, the temperature of the fourth zone is 220°C-240°C, and the temperature of the fifth zone is 210°C-230°C.

Compared with the prior art, the beneficial effects of the present invention are:
In the present invention, a glass fiber-reinforced PA6 material is prepared by reactive extrusion of anionic ring-opening polymerization of caprolactam. The present invention first proposes a specially prepared TMI-g material. TMI, as a catalyst for an anionic polymerization reaction of caprolactam, can initiate the ring-opening polymerization of caprolactam in the presence of a basic anionic initiator; and because maleic anhydride itself has good compatibility with glass fibers, the TMI-g can simultaneously serve as a catalyst and a compatibilizer, such that the caprolactam densely polymerizes and crystallizes around the glass fibers, thereby obtaining a modified material with excellent performance.

Due to the very low viscosity of the caprolactam monomer after melting, a high proportion of glass fibers can be added to prepare a glass fiber-reinforced PA6 material with a broader range of applications.

In the method for preparing the present invention, the caprolactam, the initiator, and the like are charged into the main feeding port, and the additive TMI-g is charged into the side feeding port, which can ensure that the caprolactam contacts the catalyst (TMI-g) after being completely melted, so that the polymerization is more uniform; and premature contact between the initiator and the catalyst is avoided, thereby preventing rapid polymerization of the system and reducing processing difficulty. Unlike conventional commercial-grade nylons, the reactive extrusion preparation process of the present invention allows, through formulation adjustment, a greater tuning range for the degree of polymerization, molecular weight, and crystallinity, thereby enabling the production of end products with a broader performance window and offering broad market application prospects.

### DETAILED DESCRIPTION

For ease of understanding the present invention, a more comprehensive description of the present invention will be given below in conjunction with specific embodiments. However, the present invention can be implemented in many different forms and is not limited to the embodiments described herein. Rather, the purpose of providing these embodiments is to make the understanding of the disclosure of the present invention more thorough and comprehensive.

Unless otherwise defined, all technical and scientific terms used herein have the same meaning as commonly understood by those skilled in the technical field of the present invention. The terms used in the specification of the present invention herein are only for the purpose of describing specific embodiments and are not intended to limit the present invention.

Specific information of the raw materials used in the following examples and comparative examples is as follows:
Caprolactam, commercially available from Henan Shenma (brand), with a purity of 99.0%;
Glass fiber 1, ECS305-3-K (CPIC); Glass fiber 2: ECS13-03-508A (China Jushi); Glass fiber 3: continuous glass fiber-988A (China Jushi);
Initiator 1: sodium hydroxide; Initiator 2: C10 initiator (Brüggemann); Initiator 3: C1 initiator (Brüggemann);
Antioxidant, antioxidant 1098, antioxidant 168, BASF;
Light stabilizer 1: UV-3346 (Solvay); Light stabilizer 2: UV-329 (Rianlon); Light stabilizer 3: UV305 (BASF); Light stabilizer 4: light stabilizer 4050 (BASF);
3-Isopropenyl-α,α-dimethylbenzyl isocyanate and maleic anhydride are both purchased from Aladdin Reagent;
PA6, Grade 3250 (Jiangsu Hongsheng).

All materials are commercially available conventional products commonly used in the art.

It can be understood that the above raw material reagents are only examples of some specific embodiments of the present invention to make the technical solution of the present invention clearer, and do not mean that the present invention can only use the above reagents, and the specific scope shall be subject to the claims. In addition, "parts" described in the examples and comparative examples refer to parts by weight unless otherwise specified.

Any range described in the present invention includes the end values and any numerical value between the end values, and any sub-range formed by any numerical value between the end values or the end values.

### Example 1

67.2 parts of caprolactam, 1 part of the additive TMI-g, 30 parts of the glass fiber ECS305-3-K, 1 part of the initiator sodium hydroxide, 0.2 parts of the antioxidant 1098, 0.2 parts of the antioxidant 168, and 0.4 parts of the light stabilizer UV-3346 are weighed and charged into a twin-screw extruder for melt extrusion and pelletization to obtain a glass fiber-reinforced PA6 material. The caprolactam, the initiator, the antioxidant 1098, the antioxidant 168, and the light stabilizer are fed into the main feeding port, the glass fibers are fed into the glass fiber port, and the additive TMI-g is fed into the side feeding port; the temperature of the first zone of the twin-screw extruder is 190°C, the temperature of the second zone is 220°C, the temperature of the third zone is 230°C, the temperature of the fourth zone is 230°C, and the temperature of the fifth zone is 220°C.

The preparation steps of the additive TMI-g are as follows:
Under a nitrogen atmosphere and at 80°C, 1 part of the 3-Isopropenyl-α,α-dimethylbenzyl isocyanate and 2 parts of the maleic anhydride are heated, melted, and stirred for 24 hours, and then cooled for crystallization to obtain the additive TMI-g.

### Example 2

46 parts of caprolactam, 1.5 parts of the additive TMI-g, 50 parts of the glass fiber ECS13-03-508A, 1.5 parts of the C10 initiator, 0.2 parts of the antioxidant 1098, 0.3 parts of the antioxidant 168, and 0.5 parts of the light stabilizer UV-329 are weighed and charged into a twin-screw extruder for melt extrusion and pelletization to obtain a glass fiber-reinforced PA6 material. The caprolactam, the initiator, the antioxidant, and the light stabilizer are fed into the main feeding port, the glass fibers are fed into the glass fiber port, and the additive TMI-g is fed into the side feeding port; the temperature of the first zone of the twin-screw extruder is 190°C, the temperature of the second zone is 220°C, the temperature of the third zone is 230°C, the temperature of the fourth zone is 230°C, and the temperature of the fifth zone is 220°C.

The preparation steps of the additive TMI-g are as follows:
Under a nitrogen atmosphere and at 82°C, 1 part of the 3-Isopropenyl-α,α-dimethylbenzyl isocyanate and 1 part of the maleic anhydride are heated, melted, and stirred for 25 hours, and then cooled for crystallization to obtain the additive TMI-g.

### Example 3

27.2 parts of caprolactam, 1.2 parts of the additive TMI-g, 70 parts of the glass fiber ECS13-03-508A, 0.8 parts of the C1 initiator, 0.2 parts of the antioxidant 1098, 0.2 parts of the antioxidant 168, and 0.4 parts of the light stabilizer UV-329 are weighed and charged into a twin-screw extruder for melt extrusion and pelletization to obtain a glass fiber-reinforced PA6 material. The caprolactam, the initiator, the antioxidant, and the light stabilizer are fed into the main feeding port, the glass fibers are fed into the glass fiber port, and the additive TMI-g is fed into the side feeding port; the temperature of the first zone of the twin-screw extruder is 200°C, the temperature of the second zone is 220°C, the temperature of the third zone is 230°C, the temperature of the fourth zone is 220°C, and the temperature of the fifth zone is 220°C.

Under a nitrogen atmosphere and at 80°C, 1 part of the 3-Isopropenyl-α,α-dimethylbenzyl isocyanate and 2 parts of the maleic anhydride are heated, melted, and stirred for 26 hours, and then cooled for crystallization to obtain the additive TMI-g.

### Example 4

79.1 parts of caprolactam, 0.2 parts of the additive TMI-g, 20 parts of the continuous glass fiber 988A, 0.3 parts of the initiator sodium hydroxide, 0.2 parts of the antioxidant 1098, and 0.2 parts of the light stabilizer UV305 are weighed and charged into a twin-screw extruder for melt extrusion and pelletization to obtain a glass fiber-reinforced PA6 material. The caprolactam, the initiator, the antioxidant, and the light stabilizer are fed into the main feeding port, the continuous glass fibers are fed into the glass fiber port, and the additive TMI-g is fed into the side feeding port; the temperature of the first zone of the twin-screw extruder is 160°C, the temperature of the second zone is 210°C, the temperature of the third zone is 220°C, the temperature of the fourth zone is 220°C, and the temperature of the fifth zone is 210°C.

Under a nitrogen atmosphere and at 78°C, 1 part of the 3-Isopropenyl-α,α-dimethylbenzyl isocyanate and 1 part of the maleic anhydride are heated, melted, and stirred for 20 hours, and then cooled for crystallization to obtain the additive TMI-g.

### Example 5

14.8 parts of caprolactam, 2 parts of the additive TMI-g, 80 parts of the glass fiber ECS13-03-508A, 2 parts of the C10 initiator, 0.3 parts of the antioxidant 1098, 0.3 parts of the antioxidant 168, and 0.6 parts of the light stabilizer 4050 are weighed and charged into a twin-screw extruder for melt extrusion and pelletization to obtain a glass fiber-reinforced PA6 material. The caprolactam, the initiator, the antioxidant, and the light stabilizer are fed into the main feeding port, the additive TMI-g is fed into the side feeding port, and the glass fibers are fed into the glass fiber port; the temperature of the first zone of the twin-screw extruder is 200°C, the temperature of the second zone is 230°C, the temperature of the third zone is 240°C, the temperature of the fourth zone is 240°C, and the temperature of the fifth zone is 230°C.

Under a nitrogen atmosphere and at 83°C, 1 part of the 3-Isopropenyl-α,α-dimethylbenzyl isocyanate and 3 parts of the maleic anhydride are heated, melted, and stirred for 30 hours, and then cooled for crystallization to obtain the additive TMI-g.

### Comparative Example 1

69.2 parts of PA6 3250 (Jiangsu Hongsheng), 30 parts of the glass fiber-ECS305-3-K, 0.2 parts of the antioxidant 1098, 0.2 parts of the antioxidant 168, and 0.4 parts of the light stabilizer UV-3346 are weighed and charged into a twin-screw extruder for melt extrusion and pelletization; the PA6, the glass fibers, the antioxidant, and the light stabilizer are all fed into the main feeding port, and the glass fibers are weighed and charged into the side feeding port for glass fibers; the temperature of the first zone of the twin-screw extruder is 190°C, the temperature of the second zone is 220°C, the temperature of the third zone is 230°C, the temperature of the fourth zone is 230°C, and the temperature of the fifth zone is 220°C.

### Comparative Example 2

49 parts of caprolactam PA6 3250 (Jiangsu Hongsheng), 50 parts of the glass fiber ECS13-03-508A, 0.2 parts of the antioxidant 1098, 0.3 parts of the antioxidant 168, and 0.5 parts of the light stabilizer UV-329 are weighed and charged into a twin-screw extruder for melt extrusion and pelletization; the PA6, the initiator, and the light stabilizer are fed into the main feeding port, and the glass fibers are charged into the side feeding port for glass fibers; the temperature of the first zone of the twin-screw extruder is 190°C, the temperature of the second zone is 220°C, the temperature of the third zone is 230°C, the temperature of the fourth zone is 230°C, and the temperature of the fifth zone is 220°C.

### Comparative Example 3

68.2 parts of PA6 3250 (Jiangsu Hongsheng), 30 parts of the glass fiber-ECS305-3-K, 0.2 parts of the antioxidant 1098, 0.2 parts of the antioxidant 168, 0.4 parts of the light stabilizer UV-3346, and 1 part of the compatibilizer POE-g are weighed and charged into a twin-screw extruder for melt extrusion and pelletization; the PA6, the antioxidant, the light stabilizer, and the compatibilizer POE-g are all fed into the main feeding port, and the glass fibers are charged into the side feeding port for glass fibers; the temperature of the first zone of the twin-screw extruder is 190°C, the temperature of the second zone is 220°C, the temperature of the third zone is 230°C, the temperature of the fourth zone is 230°C, and the temperature of the fifth zone is 220°C.

Material performance test of Examples 1-5 and Comparative Examples 1-2: the flame retardancy of the materials is measured according to the UL94 standard, the tensile strength is tested according to ISO 527 (test temperature 23°C), the flexural strength and flexural modulus are tested according to ISO 178 (test temperature 23°C), and the notched Izod impact strength is tested according to ISO 180 (test temperature 23°C), with the results shown in Table 1 below:

**Table 1 shows the performance test results of the products prepared in the respective examples and comparative examples.**

| | Example 1 | Example 2 | Example 3 | Example 4 | Example 5 | Comparative Example 1 | Comparative Example 2 | Comparative Example 3 |
|---|---|---|---|---|---|---|---|---|
| Tensile strength (MPa) | 224 | 256 | 261 | 201 | 281 | 163 | 215 | 169 |
| Flexural strength (MPa) | 420 | 565 | 607 | 364 | 628 | 264 | 312 | 288 |
| Flexural modulus (GPa) | 12.2 | 20.0 | 23.1 | 10.1 | 26.7 | 8.8 | 14.0 | 9.2 |
| Notched Izod impact strength (kJ/m²) | 14.2 | 26.2 | 26.7 | 8.4 | 27.8 | 7.3 | 20.8 | 9.1 |

As can be seen from the above table, the glass fiber-reinforced PA6 products prepared by the present invention have higher mechanical properties compared with the melt glass fiber-reinforced nylon products, and the maximum glass fiber content can reach 80%, providing a broader range of applications.

Although the present specification has been described in terms of embodiments, not every embodiment includes only one independent technical solution. This manner of description is provided merely for clarity. Those skilled in the art should consider the specification as a whole, and the technical solutions in the various embodiments may also be appropriately combined to form other embodiments that can be understood by those skilled in the art.

## Claims

1. A reactive extrusion glass fiber-reinforced PA6 material, **characterized in that** it is prepared from the following components in parts by weight:
| | |
|---|---|
| Caprolactam | 14.8-79.1 parts |
| Additive | TMI-g 0.2-2 parts |
| Glass fiber | 20-80 parts |
| Initiator | 0.3-2 parts |
| Antioxidant | 0.2-0.6 parts |
| Light stabilizer | 0.2-0.6 parts. |

2. The reactive extrusion glass fiber-reinforced PA6 material according to claim 1, **characterized in that** the caprolactam is a crystalline raw material with a purity of 99.0% or higher.

3. The reactive extrusion glass fiber-reinforced PA6 material according to claim 1, **characterized in that** a method for preparing the additive TMI-g is as follows:
under a nitrogen atmosphere and at 78°C-83°C, 3-Isopropenyl-α,α-dimethylbenzyl isocyanate and maleic anhydride are mixed at a mass ratio of 1:(1-3), heated, melted, and stirred for 20-30 hours, and then cooled for crystallization to obtain the additive TMI-g.

4. The reactive extrusion glass fiber-reinforced PA6 material according to claim 1, **characterized in that** the glass fiber is at least one selected from the group consisting of continuous glass fibers and chopped glass fibers.

5. The reactive extrusion glass fiber-reinforced PA6 material according to claim 1, **characterized in that** the initiator is at least one selected from the group consisting of sodium hydroxide, C10 initiator, and C1 initiator.

6. The reactive extrusion glass fiber-reinforced PA6 material according to claim 1, **characterized in that** the antioxidant is at least one selected from the group consisting of hindered amine antioxidants and phosphite antioxidants.

7. The reactive extrusion glass fiber-reinforced PA6 material according to claim 1, **characterized in that** the light stabilizer is at least one selected from the group consisting of hindered amine light stabilizers and hindered phenol light stabilizers.

8. A method for preparing the reactive extrusion glass fiber-reinforced PA6 material according to any one of claims 1-7, **characterized in that** it comprises the following steps:
weighing the components in parts by weight, feeding the caprolactam, the initiator, the antioxidant, and the light stabilizer into the main feeding port of a twin-screw extruder, feeding the additive TMI-g into the side feeding port of the twin-screw extruder, and feeding the glass fibers into the side feeding port for glass fibers, to obtain the glass fiber-reinforced PA6 material through reactive extrusion; wherein the temperature of the first zone of the twin-screw extruder is 160°C-200°C, the temperature of the second zone is 210°C-230°C, the temperature of the third zone is 220°C-240°C, the temperature of the fourth zone is 220°C-240°C, and the temperature of the fifth zone is 210°C-230°C.
